# EUROPÄISCHE PATENTSCHRIFT

(11) **EP 2 876 272 B1**
(45) Veröffentlichungstag und Bekanntmachung des Hinweises auf die Patenterteilung: **12.04.2017**
(21) Anmeldenummer: 14192868.9
(22) Anmeldetag: 12.11.2014
(51) Int. Cl.: F01N 11/00, F01N 13/18, F01N 3/20

(54) **Entnahmeeinheit eines Reduktionsmitteltanks**
Extraction unit of a reducing agent tank
Unité de prélèvement d'un réservoir d'agent reducteur

(30) Priorität: 20.11.2013 DE 102013112824
(43) Veröffentlichungstag der Anmeldung: 27.05.2015
(73) Patentinhaber: elobau GmbH & Co. KG, 88299 Leutkirch im Allgäu (DE)
(72) Erfinder: Dorn, Jürgen, 88260 Argenbühl-Eisenharz (DE); Stöhr, Ingmar, 88299 Leutkirch (DE); Waldner, Roland, 87487 Wiggensbach (DE)
(74) Vertreter: Hoppe, Lars

(56) Entgegenhaltungen:
- EP-A1- 2 573 346
- WO-A1-2012/150002
- DE-A1-102004 044 825
- GB-A- 2 476 317
- US-A1- 2015 033 700

## Beschreibung

Die vorliegende Erfindung betrifft eine Entnahmeeinheit zum Entnehmen einer, insbesondere harnstoffhaltigen, Reduktionsmittellösung aus einem Reduktionsmitteltank eines dieselmotorgetriebenen Fahrzeuges, aufweisend einen Kopf zum Verbinden der Entnahmeeinheit mit dem Reduktionsmitteltank an einer Verbindungsstelle des Reduktionsmitteltanks, einen Sensor zum Messen eines Pegelstandes der Reduktionsmittellösung, einen Sensor zum Messen einer Temperatur der Reduktionsmittellösung und einen Sensor zum Messen einer Qualität der Reduktionsmittellösung, wobei der Kopf einen Anschlussstutzen zum Ansaugen der Reduktionsmittellösung aus dem Reduktionsmitteltank aufweist, und wobei der Anschlussstutzen in Einbaulage der Entnahmeeinheit relativ zu dem Reduktionsmitteltank parallel zu dem Reduktionsmitteltank nahe der Verbindungsstelle verlaufend ausgebildet is. Zur Reduzierung von Stickoxidemissionen von dieselmotorgetriebenen Fahrzeugen sind aus dem Stand der Technik Abgasbehandlungsvorrichtungen und -verfahren bekannt, bei denen eine Reduktionsmittellösung, die in einem Reduktionsmitteltank gespeichert ist, der Abgasbehandlungsvorrichtung zugeführt wird, beispielsweise das sogenannte Selective Catalytic Reduction (SCR)-Verfahren. Bei der Reduktionsmittellösung handelt es sich oftmals um eine Harnstoffwasserlösung. Solche Harnstoffwasserlösungen werden beispielsweise unter den Handelsbezeichnungen AdBlue, Urea, Denoxium und AUS 32 kommerziell vertrieben. Die Reduktionsmittellösung ist in der Regel über einen längeren Zeitraum in dem Reduktionsmitteltank gespeichert, bevor sie der Abgasbehandlungsvorrichtung zugeführt wird. Auf Grund des langen Speicherzeitraumes besteht die Gefahr, dass die Reduktionsmittellösung an Qualität verliert, beispielsweise durch chemische Ab- und Umbauprozesse. Eine qualitativ minderwertige Reduktionsmittellösung führt jedoch zu einer lediglich eingeschränkten Reduktion der Stickstoffemissionen, sodass gesetzliche Vorschriften diesbezüglich möglicherweise nicht eingehalten werden. Gattungsgemäße Entnahmeeinheiten sind ebenfalls aus dem Stand der Technik bekannt. Die Offenlegungsschrift DE 10 2009 055 716 A1 beschreibt einen Reduktionsmitteltank mit einer Tankentnahmeeinheit. Um die Eigenschaften der zur Abgasreinigung verwendeten Reduktionsmittellösung zu bestimmen, sind Sensoren zum Messen des Pegelstandes, der Temperatur und der Qualität der Reduktionsmittellösung an einen Boden des Reduktionsmitteltanks und an der Tankentnahmeeinheit angeordnet. Der Sensor zum Messen der Qualität bestimmt die elektrische Leitfähigkeit der Reduktionsmittellösung und die Geschwindigkeit von Schall in der Reduktionsmittellösung. Auch in der Offenlegungsschrift DE 10 2011 081 316 A1 ist ein Ultraschallsensor zum Messen der Dichte und damit der Qualität der Reduktionsmittellösung offenbart. Der Ultraschallsensor in entweder in einer Einfüllleitung oder einer Auslassleitung des Reduktionsmitteltanks angeordnet. Aus der Offenlegungsschrift GB 2476317 A ist eine Entnahmeeinheit bekannt, mit der Sensoren zum Messen der Temperatur, des Pegelstandes und der Qualität der Reduktionsmittellösung, die im Tank angeordnet sind, verbunden sind. Der Anschlussstutzen in Einbaulage der Entnahmeeinheit relativ zu dem Reduktionsmitteltank ist parallel zu dem Reduktionsmitteltank nahe der Verbindungsstelle verlaufend ausgebildet. Nachteilig an dem vorstehend diskutierten Stand der Technik ist, dass die Sensoren an verschiedenen und/oder schwer zugänglichen Orten angeordnet sind. Dieser Umstand bedingt eine umfangreiche und separate und damit kostenintensive Verkabelung der einzelnen Sensoren und einen hohen Aufwand sowohl bei der Erstmontage als auch bei einem etwaigen Austausch eines defekten Sensors.

Des Weiteren erfordern Entnahmeeinheiten Raum zum Anordnen derselben in den Fahrzeugen. Aus der Offenlegungsschrift DE 10 2009 035 272 A1 ist eine Entnahmeeinheit bekannt, deren Anschlussstutzen senkrecht aus dem Reduktionsmitteltank herausragen und die somit erheblich aus dem Reduktionsmitteltank herausragt, was in Anbetracht des Umstandes, dass der Reduktionsmitteltank oftmals direkt unterhalb eines Führerhauses des Fahrzeuges angeordnet ist, nachteilig ist. Die Offenlegungsschrift DE 10 2004 051 746 A1 beschreibt eine Entnahmeeinheit, deren Anschlussstutzen ebenfalls senkrecht aus dem Reduktionsmitteltank herausragen. Allerdings ist der Kopf dieser Entnahmeeinheit im Wesentlichen innerhalb des Reduktionsmitteltanks angeordnet, sodass die Entnahmeeinheit weniger weit aus dem Reduktionsmitteltank herausragen dürfte. Die Anordnung des Kopfes in dem Reduktionsmitteltank geht jedoch zu Lasten des für die Reduktionsmittellösung zur Verfügung stehenden Volumens.

Der vorliegenden Erfindung liegt daher die Aufgabe zu Grunde, eine Entnahmeeinheit der eingangs genannten Art anzugeben, die kostengünstig herzustellen und einfach zu montieren ist und wenig anderweitig nutzbaren Raum erfordert.

Zur Lösung dieser Aufgabe schlägt die Erfindung eine Entnahmeeinheit der eingangs genannten Art vor, wobei der Sensor zum Messen der Qualität der Reduktionsmittellösung in dem Kopf angeordnet ist. Durch die erfindungsgemäße Anordnung des Sensors zum Messen der Qualität der Reduktionsmittellösung im Kopf der Entnahmeeinheit entfällt eine lange Kabelführung von dem Sensor zu einem elektrischen Bauteil, das geeignet ist, Signale des Sensors entweder auszuwerten oder an eine Bordelektronik des Fahrzeuges weiterzuleiten. Somit sind die Kosten für die Verkabelung des Sensors mit großem Vorteil reduziert. Weiterhin vereinfacht eine kurze und damit weniger störende Kabelführung die Montage der erfindungsgemäßen Entnahmeeinheit in dem Reduktionsmitteltank. Der nicht erfindungsgemäße, in der Nähe der Verbindungsstelle parallele Verlauf des Anschlussstutzens erlaubt eine Leitungs- und Kabelführung in Räumen nahe des Reduktionsmitteltanks, die ansonsten nicht oder nur bedingt nutzbar sind, da viele Baugruppen von Fahrzeugen nicht direkt an dem Reduktionsmitteltank angeordnet werden können, beispielsweise auf Grund einer zu vermeidenden Verschmutzungsgefahr der Baugruppen beim Betanken des Reduktionsmitteltanks mit Reduktionsmittellösung. Mit großem Vorteil wird an sich toter Raum zum Unterbringen von Teilen der erfindungsgemäßen Entnahmeeinheit verwendet, sodass anderweitig nutzbarer Raum nicht beansprucht werden muss. Das Merkmal "in Einbaulage der Entnahmeeinheit relativ zu dem Reduktionsmitteltank" im Sinne der vorliegenden Erfindung bedeutet, dass die Entnahmeeinheit relativ zu einem Reduktionmitteltank so angeordnet ist, wie sie bei einem regulären Betreiben der Entnahmeeinheit angeordnet wäre. Bei einem regulären Betrieb wäre die Entnahmeeinheit beispielsweise in einer Öffnung eines Reduktionsmitteltanks angeordnet und dort an dem Reduktionsmitteltank befestigt, wobei die Öffnung des Reduktionsmitteltanks der erfindungsgemäßen Verbindungsstelle entspräche. Regelmäßig ist die Verbindungsstelle an einer Oberseite des Reduktionsmitteltanks angeordnet, sodass die Entnahmeeinheit an der Oberseite des Reduktionsmitteltanks angeordnet ist und senkrecht nach unten in den Reduktionsmitteltank hängt. In diesem Fall verläuft der Anschlussstutzen zu dem Reduktionsmitteltank nahe der Verbindungsstelle horizontal. Sowohl die Anordnung des Sensors zum Messen der Qualität der Reduktionsmittellösung im Kopf als auch der in der Nähe der Verbindungsstelle parallele Verlauf des Anschlussstutzens des Kopfes ermöglichen eine kompakte Bauweise der erfindungsgemäßen Entnahmeeinheit.

In einer vorteilhaften Ausführungsform der Erfindung ist vorgesehen, dass sämtliche Sensoren mit einer einzigen Platine elektrisch verbunden sind, wobei die Platine in dem Kopf angeordnet ist. Dieses Bündelung der elektrischen Schaltwege und -kreise auf einer Platine trägt ebenfalls dazu bei, dass weniger Verkabelung erforderlich ist, um sämtliche Sensoren an die Bordelektronik des Fahrzeuges anzubinden. Die Bündelung ist besonders effektiv, wenn die Platine als Knotenpunkt der elektrischen Stränge zu den einzelnen Sensoren in dem Kopf angeordnet ist, da der Kopf das Verbindungsglied zwischen einem nicht oder nur schwer zugänglichen Inneren des Reduktionsmitteltanks und einem einfach zugänglichen Äußeren des Reduktionsmitteltanks bildet.

Weiterhin erweist es sich erfindungsgemäß als besonders vorteilhaft, dass die Entnahmeeinheit ein serielles Bussystem, insbesondere Controller Area Network (CAN)-Bussystem, aufweist, wobei das Bussystem einen einzigen Stecker zum elektrischen Verbinden sämtlicher Sensoren mit einer Bordelektronik des Fahrzeuges aufweist. Diese Ausgestaltung der Erfindung stellt eine Fortsetzung der zuvor beschriebenen Bündelung dar. Die auf einer einzigen Platine zusammengefassten Signale werden mittels des Bussystems über ein einziges Kabel zu der Bordelektronik des Fahrzeuges weitergeleitet. Eine bis dato übliche teure Mehrfachverkabelung der einzelnen Sensoren ist somit hinfällig.

Darüber hinaus ist es erfindungsgemäß mit großem Vorteil vorgesehen, dass der Stecker mittels eines mehradrigen, insbesondere vieradrigen, Kabels an dem Kopf mechanisch befestigt ist, wobei das Kabel bei einer Durchtrittsöffnung in dem Kopf von einem abgewinkelten Kabeldrehgelenk unterbrochen oder in ein Kabeldrehgelenk übergehend ausgebildet ist, wobei das Kabeldrehgelenk in mindestens einer Ebene einen Drehwinkel von mindestens 150° bereitstellend ausgebildet ist. Bevorzugt ist ein Drehwinkel von 180°oder größer. Besonders bevorzugt ist ein Drehwinkel von 180°oder größer in zwei zueinander orthogonalen Ebenen, der unter Verwendung einer Kabelkugelgelenks bereitgestellt wird. Die so gewonnene Flexibilität hinsichtlich der Ausgangsrichtung des Buskabels aus dem Kopf vereinfacht die Montage und gegebenenfalls eine Demontage der erfindungsgemäßen Entnahmeeinheit erheblich. Zusätzlich wird eine Richtungsunabhängigkeit erreicht, sodass die Entnahmeeinheit zu vielen Typen von Reduktionsmitteltanks von verschiedensten Herstellern kompatibel ist.

Es erweist sich erfindungsgemäß als besonders vorteilhaft, dass der Sensor zum Messen der Qualität der Reduktionsmittellösung mindestens eine optische Eigenschaft der Reduktionsmittellösung, insbesondere Refraktion von Licht vorbestimmter Wellenlängen, detektierend ausgebildet ist. Somit ist eine spektrale Analyse der Reduktionsmittellösung möglich, die sehr präzise ist, sodass die Qualität der Reduktionsmittellösung umfassend bestimmbar ist. In einer vereinfachten Ausführungsform wird Licht einer einzigen vorbestimmten Wellenlänge oder quasi-monochromes Licht in einem engen Wellenlängenbereich verwendet. Alternativ dazu können auch andere optische Eigenschaften, wie beispielsweise Emission, Absorption oder Vorwärtsstreuung, bei einer oder mehreren diskreten Wellenlängen oder einem oder mehreren kontinuierlichen Wellenlängenbereichen erfasst werden, um die Qualität der Reduktionsmittellösung zu bestimmen. Weiterhin erlaubt die Detektion von optischen Eigenschaften der Reduktionsmittellösung, dass sowohl Signalgeber als auch Signalempfänger des Sensors hinter einer transparenten Materiallage von der Reduktionsmittellösung abgeschottet angeordnet sein können und somit beispielsweise vor aggressiven Chemikalien in der Reduktionsmittellösung bestens geschützt sind. Der Signalgeber und der Signalempfänger der erfindungsgemäßen Sensoranordnung haben gegenüber dem Stand der Technik deutlich verlängerte Standzeiten und sind gegen Verschmutzung gefeit, was sich wiederum positiv auf die Präzision der Qualitätsbestimmung auswirkt. In einer alternativen Ausführungsform der Erfindung kann der Sensor zum Messen der Qualität der Reduktionsmittellösung mindestens eine nicht optische Eigenschaft der Reduktionsmittellösung, insbesondere Schallgeschwindigkeit oder elektrische Leitfähigkeit, detektierend ausgebildet sein.

Erfindungsgemäß ist mit großem Vorteil vorgesehen, dass der Sensor zum Messen der Qualität der Reduktionsmittellösung ein oben ein- und ausströmbares Detektionsvolumen aufweist, das bei einem Betrieb des Fahrzeuges von der Reduktionsmittellösung durchströmt wird. Das Merkmal "oben ein- und ausströmbares Detektionsvolumen" im Sinne der Erfindung bedeutet, dass die Reduktionsmittellösung bei einem Ansaugen aus dem Reduktionsmitteltank von oben in das Detektionsvolumen einströmt und nach oben aus dem Detektionsvolumen ausströmt. Da die Dichte der Reduktionsmittellösung größer als die von Luft ist, können in der Reduktionsmittellösung gegebenenfalls enthaltene Luftblasen in der Reduktionsmittellösung aufsteigen und das Detektionsvolumen nach oben hin verlassen, sodass Fehlereinflüsse auf Grund von Luftblasen in der Reduktionsmittellösung ausgeschlossen sind. Dies trägt zu einer gesteigerten Präzision der Qualitätsbestimmung bei.

Alternativ dazu ist mit großem Vorteil vorgesehen, dass der Sensor zum Messen der Qualität der Reduktionsmittellösung ein seitlich ein- und ausströmbares Detektionsvolumen aufweist, das bei einem Betrieb des Fahrzeuges von der Reduktionsmittellösung durchströmt wird. Das Merkmal "seitlich ein- und ausströmbares Detektionsvolumen" im Sinne der Erfindung bedeutet, dass die Reduktionsmittellösung bei einem Ansaugen aus dem Reduktionsmitteltank seitlich in das Detektionsvolumen einströmt und seitlich aus dem Detektionsvolumen ausströmt. In der Reduktionsmittellösung enthaltene Luftblasen können aufsteigen und das Detektionsvolumen nach oben hin verlassen, um luftblasenbedingte Fehlereinflüsse zu minimieren. Zusätzlich kann die Reduktionsmittellösung nach einem Stilllegen des Fahrzeuges aus dem Detektionsvolumen abfließen. Hierdurch wird eine Verunreinigung des Detektionsvolumens auf Grund einer in dem Detektionsvolumen abgestandenen Reduktionsmittellösung verhindert, was ebenfalls zu einer gesteigerten Präzision der Qualitätsbestimmung beiträgt.

Weiterhin erweist es sich erfindungsgemäß als vorteilhaft, dass die Entnahmeeinheit einen von dem Kopf beabstandeten Fuß aufweist, wobei der Kopf und der Fuß aus Kunststoff bestehend sind. Somit sind der Kopf und der Fuß gegen die in der Reduktionsmittellösung enthaltenen Chemikalien resistent. Zusätzlich ist handelsüblicher Kunststoff, beispielsweise Polyamid (PA), als Ausgangsmaterial für den Kopf und den Fuß kostengünstiger als Metall, wie Aluminium oder Edelstahl, und lässt sich einfach verarbeiten. Zum Beispiel sind die Kunststoffteile, die ein Gehäuse des Kopfes oder des Fußes bilden, mittels Ultraschallschweißens stoffschlüssig verbindbar.

In Ausgestaltung der Erfindung ist mit großem Vorteil vorgesehen, dass die Entnahmeeinheit eine Heizvorrichtung zum Heizen des Sensors zum Messen der Qualität der Reduktionsmittellösung aufweist. Somit wird eine bei niedrigen Umgebungstemperaturen eingefrorene Reduktionsmittellösung in dem Detektionsvolumen nach einem Betriebsbeginn des Fahrzeuges zügig geschmolzen, um ein Durchströmen des Detektionsvolumens mit flüssiger Reduktionsmittellösung und folglich eine fehlerverminderte Detektion der Qualität der Reduktionsmittellösung zu ermöglichen.

In einer vorteilhaften Ausführungsform der Erfindung ist vorgesehen, dass die Entnahmeeinheit eine Heizvorrichtung zum Heizen der Reduktionsmittellösung aufweist, wobei die Heizvorrichtung zwei Rohre zum Zuführen eines Heizmediums und zwei Rohre zum Abführen des Heizmediums aufweist, wobei die Rohre im Wesentlichen entlang von Seitenkanten eines Quaders mit einer quadratischen Grundfläche angeordnet sind. Vorzugsweise sind diese Heizvorrichtung und die oben beschriebenen Heizvorrichtung zum Heizen des Sensors zum Messen der Qualität der Reduktionsmittellösung eine einzige Heizvorrichtung, die beide Zwecke erfüllt. Allerdings sind auch zwei separate Heizvorrichtungen, eine zum Heizen des Sensors zum Messen der Qualität der Reduktionsmittellösung und eine zum Heizen der Reduktionsmittellösung denkbar. Bei niedrigen Umgebungstemperaturen ist eine Heizvorrichtung äußerst zweckmäßig, um eine eingefrorene Reduktionsmittellösung zeitnah nach einem Betriebsbeginn des Fahrzeuges zu schmelzen und die erfindungsgemäße Entnahmeeinheit und damit die Abgasbehandlungsvorrichtung des Fahrzeuges in einen funktionsfähigen Zustand zu versetzen. Darüber hinaus wird ein Einfrieren der Reduktionsmittellösung während des Betriebs des Fahrzeuges verhindert. Die Redundanz der Rohre zum Zuführen und Abführen des Heizmediums gewährt eine ausfallsichere Heizvorrichtung. Weiterhin führt die symmetrische Anordnung der Rohre zum Zuführen und Abführen des Heizmediums zu einer stabilen Entnahmeeinheit, die gegebenenfalls dem Gefrierdruck von einer eingefrorenen Reduktionsmittellösung standhält.

Dabei erweist es sich erfindungsgemäß als besonders vorteilhaft, dass die Entnahmeeinheit einen von dem Kopf beabstandeten Fuß aufweist, wobei zwischen dem Kopf und dem Fuß die Rohre angeordnet sind, wobei die Rohre gleichartig ausgebildet und mittels Steckverbindungen mit dem Kopf und dem Fuß verbunden sind. Die gleichartigen Rohre tragen zusätzlich zu der symmetrischen und damit stabilen Anordnung bei und sind kostengünstiger herstellbar als beispielsweise vier voneinander verschiedene Rohre. Die erfindungsgemäß vorgesehene Steckverbindung zum Verbinden der Rohre mit dem Kopf und dem Fuß erlaubt einen einfachen und schnellen Zusammenbau der Entnahmeeinheit, ohne weitere Bauteile oder Arbeitsschritte zu erfordern. Zur Sicherung der Steckverbindungen können an der Entnahmeeinheit eine oder mehrere Schraubverbindungen, insbesondere eine relativ zu den Rohren zum Zuführen und Abführen des Heizmediums zentrale Schraubverbindung, angeordnet sein.

Darüber hinaus ist erfindungsgemäß im großem Vorteil vorgesehen, dass die Entnahmeeinheit ein Entnahmerohr zum Ansaugen der Reduktionsmittellösung aus dem Reduktionsmitteltank aufweist, wobei das Entnahmerohr nahe, insbesondere in Kontakt mit, einem der Rohre zum Zuführen des Heizmediums angeordnet ist. Somit wird das Entnahmerohr unmittelbar nach dem Betriebsbeginn des Fahrzeuges erwärmt, um eine gegebenenfalls in dem Entnahmerohr eingefrorene Reduktionsmittellösung zügig zu schmelzen und der Abgasbehandlungsvorrichtung des Fahrzeuges zeitnah zur Verfügung stellen zu können. In einer weniger vorteilhaften Ausführungsform wäre es denkbar, das Entnahmerohr nahe, insbesondere in Kontakt mit, einem der Rohre zum Abführen des Heizmediums anzuordnen.

Hierzu erweist es sich erfindungsgemäß als besonders vorteilhaft, dass das Heizmedium ein Motorkühlmedium des Fahrzeuges ist. Das Motorkühlmedium wird nach Betriebsbeginn des Fahrzeuges durch den Verbrennungsvorgang in dem Dieselmotor zwangsläufig erwärmt und steht somit als Heizmedium für andere fahrzeuginterne Vorrichtungen, wie beispielsweise für die erfindungsgemäße Entnahmeeinheit, zur Verfügung. Eine separate Vorrichtung zum Erwärmen des Heizmediums ist nicht erforderlich, was zum Bereitstellen einer kostengünstigen Entnahmeeinheit erheblich beiträgt.

Weiterhin ist erfindungsgemäß vorgesehen, dass der Sensor zum Messen des Pegelstandes der Reduktionsmittellösung einen Schwimmer umfasst, wobei der Schwimmer an einem im Wesentlichen vertikal orientierten Rohr gleitend angeordnet ist und einen Permanentmagneten aufweist, wobei der Permanentmagnet in dem Rohr angeordnete und entlang des Rohres aufgereihte Reedschalter schaltend ausgebildet ist. Das vertikal orientierte Rohr ist insbesondere relativ zu den Rohren zum Zuführen und Abführen des Heizmediums zentral angeordnet und kann die Schraubverbindung zum Sichern der Steckverbindungen aufweisen. Die Kette von Reedschaltern stellt eine berührungslos arbeitende Kontaktreihe dar, die innerhalb des vertikal orientierten Rohres angeordnet ist und somit keinen Kontakt zu der zumindest mäßig aggressiven Reduktionsmittellösung hat, was die Standzeit des Sensors zum Messen des Pegelstandes deutlich verlängert.

Zusätzlich erweist es sich erfindungsgemäß als vorteilhaft, dass die Entnahmeeinheit in Einbaulage mittels eines Bajonettverschlusses mit dem Reduktionsmitteltank verbunden ist. Ein Bajonettverschluss ermöglicht eine schnelle Montage und Demontage, ohne eine ganze oder mehrere Umdrehungen der Entnahmeeinheit relativ zu dem Reduktionsmitteltank zu erfordern. Somit lässt sich die Entnahmeeinheit selbst bei an dem Kopf angeschlossenen Leitungen und Kabeln lösen und zumindest teilweise aus dem Reduktionsmitteltank ziehen, beispielsweise um die Entnahmeeinheit auf Verschmutzung zu überprüfen.

Hierzu trägt ebenfalls bei, dass die Entnahmeeinheit eine im Wesentlichen zylindrische Form aufweist. Die zylindrische Form erleichtert das Einführen der Entnahmeeinheit in den Reduktionmitteltank und stellt minimale Anforderungen an die Geometrie des Reduktionsmitteltanks, was mit großem Vorteil zu einer Kompatibilität der Entnahmeeinheit zu vielen Typen von Reduktionsmitteltanks von verschiedensten Herstellern führt.

Es erweist sich erfindungsgemäß als besonders vorteilhaft, dass der Kopf in Einbaulage der Entnahmeeinheit relativ zu dem Reduktionsmitteltank zur Hälfte außerhalb des Reduktionsmitteltanks und zur Hälfte innerhalb des Reduktionsmitteltanks angeordnet ist. Eine derartige Anordnung bildet einen ausgewogenen Kompromiss, um einerseits möglichst wenig anderweitig nutzbaren Raum außerhalb des Reduktionsmitteltanks für die Entnahmeeinheit zu beanspruchen und andererseits ein möglichst großes Volumen zum Aufnehmen der Reduktionsmittellösung innerhalb des Reduktionsmitteltanks bereitzustellen.

Es ist erfindungsgemäß mit großem Vorteil vorgesehen, dass der Kopf auf Grund seiner kompakten Bauweise in Einbaulage der Entnahmeeinheit relativ zu dem Reduktionsmitteltank weniger als 8 cm aus dem Reduktionsmitteltank herausragend und weniger als 8 cm in den Reduktionsmitteltank hineinragend ausgebildet ist. Beispielsweise ragt der Kopf 7 cm aus dem Reduktionsmitteltank heraus und 7 cm in den Reduktionsmitteltank hinein oder 7 cm heraus und 6 cm hinein oder 7 cm heraus und 5 cm hinein oder 7 cm heraus und 4 cm hinein oder 7 cm heraus und 3 cm hinein oder 6 cm heraus und 7 cm hinein oder 6 cm heraus und 6 cm hinein oder 6 cm heraus und 5 cm hinein oder 6 cm heraus und 4 cm hinein oder 6 cm heraus und 3 cm hinein oder 5 cm heraus und 7 cm hinein oder 5 cm heraus und 6 cm hinein oder 5 cm heraus und 5 cm hinein oder 5 cm heraus und 4 cm hinein oder 5 cm heraus und 3 cm hinein oder 4 cm heraus und 7 cm hinein oder 4 cm heraus und 6 cm hinein oder 4 cm heraus und 5 cm hinein oder 4 cm heraus und 4 cm hinein oder 4 cm heraus und 3 cm hinein oder 3 cm heraus und 7 cm hinein oder 3 cm heraus und 6 cm hinein oder 3 cm heraus und 5 cm hinein oder 3 cm heraus und 4 cm hinein oder 3 cm heraus und 3 cm hinein. Ein derartig kompakt aufgebauter Kopf ist selbst in sehr beengten Umgebungen verwendbar.

Die Erfindung wird in einer bevorzugten Ausführungsform unter Bezugnahme auf die Zeichnungen beispielhaft beschrieben, wobei weitere vorteilhafte Einzelheiten den Figuren der Zeichnungen zu entnehmen sind. Die Figuren der Zeichnungen zeigen im Einzelnen:
Fig. 1 eine perspektivische Ansicht einer erfindungsgemäßen Entnahmeeinheit;
Fig. 2 eine perspektivische Explosionsdarstellung eines Teils eines Kopfes der erfindungsgemäßen Entnahmeeinheit;
Fig. 3 eine perspektivische Explosionsdarstellung des Kopfes der erfindungsgemäßen Entnahmeeinheit; und
Fig. 4 eine perspektivische Explosionsdarstellung eines Fußes der erfindungsgemäßen Entnahmeeinheit.

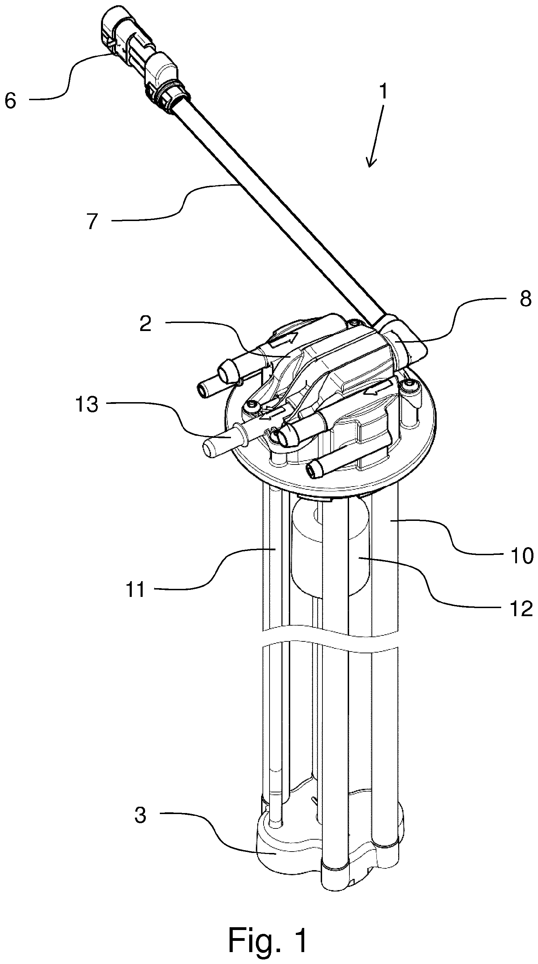

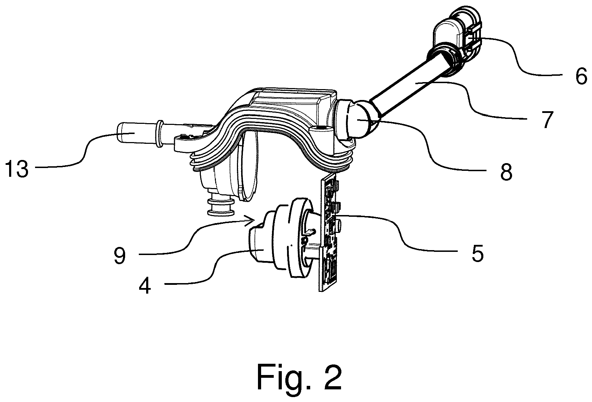

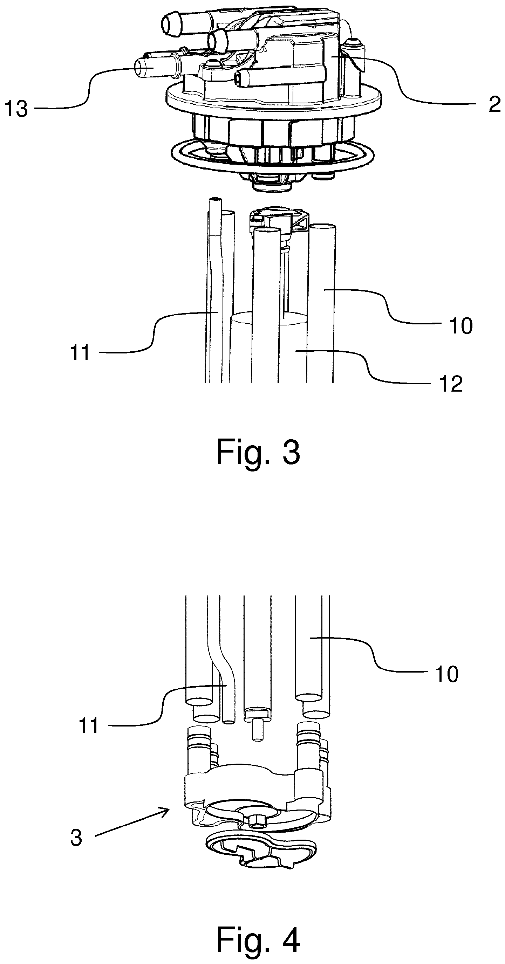

In **Fig. 1** ist eine perspektivische Ansicht einer erfindungsgemäßen Entnahmeeinheit 1 zum Entnehmen einer, insbesondere harnstoffhaltigen, Reduktionsmittellösung aus einem Reduktionsmitteltank eines dieselmotorgetriebenen Fahrzeuges gezeigt. Die Entnahmeeinheit 1 weist einen Kopf 2 zum Verbinden der Entnahmeeinheit 1 mit dem Reduktionsmitteltank an einer Verbindungsstelle des
Reduktionsmitteltanks, einen Sensor zum Messen eines Pegelstandes der Reduktionsmittellösung, einen Sensor zum Messen einer Temperatur der Reduktionsmittellösung und einen Sensor 4 zum Messen einer Qualität der Reduktionsmittellösung auf, wobei der Sensor 4 zum Messen der Qualität der Reduktionsmittellösung in dem Kopf 2 angeordnet ist (siehe hierzu insbesondere **Fig. 2**). Der Kopf 2 weist einen Anschlussstutzen 13 zum Ansaugen der Reduktionsmittellösung aus dem Reduktionsmitteltank auf, wobei der Anschlussstutzen 13 in Einbaulage der Entnahmeeinheit 1 relativ zu dem Reduktionsmitteltank parallel zu dem Reduktionsmitteltank nahe der Verbindungsstelle verlaufend ausgebildet ist. Besonders vorteilhaft sind zusätzlich zu dem Anschlussstutzen 13 zum Ansaugen der Reduktionsmittellösung aus dem Reduktionsmitteltank alle weiteren Anschlussstutzen des Kopfes 2 zum Anschließen von Fluidleitungen an die Entnahmeeinheit 1 in Einbaulage der Entnahmeeinheit 1 relativ zu dem Reduktionsmitteltank parallel zu dem Reduktionsmitteltank nahe der Verbindungsstelle verlaufend ausgebildet. Die weiteren Anschlussstutzen können beispielsweise Anschlussstutzen zum Zuführen und Abführen eines Heizmediums, zum Rückführen der Reduktionsmittellösung in den Reduktionsmitteltank und zum Zuführen und Abführen beziehungsweise zum passiven Einströmen und Ausströmen von Umgebungsluft umfassen, wie in **Fig. 1** gezeigt. Die Entnahmeeinheit 1 ist im Wesentlichen zylindrisch ausgebildet, wobei an den Deck- und Grundflächen des Zylinders der Kopf 2 beziehungsweise ein von dem Kopf 2 beabstandeter Fuß 3 angeordnet ist. Der Kopf 2 und der Fuß 3 bestehen aus Kunststoff, insbesondere aus Polyamid (PA). Die Entnahmeeinheit 1 weist ferner eine Heizvorrichtung 10 zum Heizen des Sensors 4 zum Messen der Qualität der Reduktionsmittellösung und zum Heizen der Reduktionsmittellösung auf, wobei die Heizvorrichtung 10 zwei Rohre zum Zuführen eines Heizmediums und zwei Rohre zum Abführen des Heizmediums aufweist, wobei die Rohre im Wesentlichen entlang von Seitenkanten eines Quaders mit einer quadratischen Grundfläche angeordnet sind. Die Rohre sind gleichartig ausgebildet und mittels Steckverbindungen mit dem Kopf 2 und dem Fuß 3 verbunden (siehe hierzu insbesondere **Fig. 3** und **Fig. 4**). Dies führt zu einer symmetrischen Gestalt der Entnahmeeinheit 1. Weiterhin weist die Entnahmeeinheit 1 ein Entnahmerohr 11 zum Ansaugen der Reduktionsmittellösung aus dem Reduktionsmitteltank auf. Das Entnahmerohr 11 ist in Kontakt mit einem der Rohre zum Zuführen des Heizmediums angeordnet. Das Heizmedium ist in der Regel ein Motorkühlmedium des Fahrzeuges. Darüber hinaus ist in **Fig. 1** an dem Kopf 2 der Entnahmeeinheit 1 ein Bajonettverschluss zu erkennen, der zum Befestigen der Entnahmeeinheit 1 an dem nicht dargestellten Reduktionsmitteltank dient. Als Verbindungsstelle weist der Reduktionsmitteltank eine Öffnung, in der Regel eine kreisrunde Bohrung, auf. Der Sensor zum Messen des Pegelstandes der Reduktionsmittellösung umfasst einen Schwimmer 12, wobei der Schwimmer 12 an einem im Wesentlichen vertikal orientierten Rohr gleitend angeordnet ist und einen Permanentmagneten aufweist, wobei der Permanentmagnet in dem Rohr angeordnete und entlang des Rohres aufgereihte Reedschalter schaltend ausgebildet ist. Das vertikal orientierte Rohr ist zu den Rohren zum Zuführen und Abführen des Heizmediums der Heizvorrichtung 10 zentral angeordnet.

In **Fig. 2** ist eine perspektivische Explosionsdarstellung eines Teils des Kopfes 2 der erfindungsgemäßen Entnahmeeinheit 1 gezeigt. Der Sensor 4 zum Messen der Qualität der Reduktionsmittellösung ist in dem Kopf 2 angeordnet, sitzt direkt auf einer Platine 5 und detektiert die Refraktion von Licht bei diskreten vorbestimmten Wellenlängen in einem engen Wellenlängenbereich, um ein auf diskrete Wellenlängen gestütztes Spektrum des Brechungsindexes zu bestimmen. Hierzu enthält der Sensor 4 zum Messen der Qualität der Reduktionsmittellösung eine lichtemittierende Diode als Sender und eine Photodiode als Empfänger. Die Messung erfolgt in einem oben ein- und ausströmbaren Detektionsvolumen 9, das bei einem Betrieb des Fahrzeuges von der Reduktionsmittellösung durchströmt wird. In **Fig. 2** nicht gezeigt ist ein erfindungsgemäß seitlich ein- und ausströmbares Detektionsvolumen 9. Neben dem Sensor 4 sind alle weiteren Sensoren der erfindungsgemäßen Entnahmeeinheit 1 mit der Platine 5 als einzige Platine der Entnahmeeinheit 1 elektrisch verbunden. Die Platine 5 ist in dem Kopf 2 angeordnet. Die Entnahmeeinheit 1 weist ein Controller Area Network (CAN)-Bussystem aufweist. Das Bussystem ermöglicht es, sämtliche Sensoren mittels eines einzigen Steckers 6 mit einer Bordelektronik des Fahrzeuges elektrisch zu verbinden. Der Stecker 6 ist über das ein vieradriges Kabel 7 an dem Kopf 2 befestigt, wobei das Kabel 7 bei einer Durchtrittsöffnung in dem Kopf 2 in ein Kabeldrehgelenk 8 übergeht, wobei das Kabeldrehgelenk 8 in einer Ebene einen Drehwinkel von etwa 180° bereitstellt. Zwischen dem Teil des Kopfes 2, der in Fig. 2 gezeigt ist, und dem restlichen Teil des Kopfes 2 ist eine Lamellendichtung angeordnet, um ein Inneres des Kopfes 2 gegenüber der Umgebung abzudichten. Die Verbindung der beiden Kopfteile erfolgt mittels vier Schraubverbindungen.

In **Fig. 3** ist eine perspektivische Explosionsdarstellung des Kopfes 2 der erfindungsgemäßen Entnahmeeinheit 1 gezeigt. Der Kopf 2 weist einen Anschlussstutzen 13 zum Ansaugen der Reduktionsmittellösung aus dem nicht dargestellten Reduktionsmitteltank und weitere Anschlussstutzen zum Anschließen von Fluidleitungen an die Entnahmeeinheit 1 auf, beispielsweise Anschlussstutzen zum Zuführen und Abführen eines Heizmediums, zum Rückführen der Reduktionsmittellösung in den Reduktionsmitteltank und zum Zuführen und Abführen beziehungsweise zum passiven Einströmen und Ausströmen von Umgebungsluft. Sämtliche Anschlussstutzen sind in Einbaulage der Entnahmeeinheit 1 relativ zu dem Reduktionsmitteltank parallel zu dem Reduktionsmitteltank nahe der Verbindungsstelle verlaufend ausgebildet. Neben den Anschlüssen umfasst der Kopf 2 einen Bajonettverschluss mit einer Dichtung, der zum Befestigen der Entnahmeeinheit 1 an dem Reduktionsmitteltank dient. Der Sensor 4 zum Messen der Qualität der Reduktionsmittellösung ist in dem Kopf 2 zwischen einer Zuführleitung und einer Abführleitung zum Zuführen beziehungsweise Abführen des Heizmediums angeordnet, wobei die Zuführleitung und die Abführleitung einen Teil der Heizvorrichtung 10 bilden und den Sensor 4 zum Messen der Qualität der Reduktionsmittellösung heizen. Der Sensor zum Messen des Pegelstandes der Reduktionsmittellösung umfasst einen Schwimmer 12, wobei der Schwimmer 12 an einem vertikal orientierten Rohr gleitend angeordnet ist. Die vier der Heizvorrichtung 10 zugehörigen Rohre zum Zuführen und Abführen des Heizmediums sind gleichartig ausgebildet und mittels Steckverbindungen mit dem Kopf 2 verbunden. Der Kopf 2 ist in Einbaulage der Entnahmeeinheit 1 relativ zu dem nicht dargestellten Reduktionsmitteltank etwa zur Hälfte außerhalb des Reduktionsmitteltanks und etwa zur Hälfte innerhalb des Reduktionsmitteltanks angeordnet ist. Der Kopf 2 ragt in Einbaulage der Entnahmeeinheit 1 relativ zu dem Reduktionsmitteltank etwa 4,5 cm aus dem Reduktionsmitteltank heraus und etwa 4,5 cm in den Reduktionsmitteltank hinein. Dieser geringe Raumbedarf mit einer baulichen Gesamthöhe des Kopfes 2 von nur etwa 8 cm wird erreicht durch die kompakte Sensorelektronik mit dem Sensor 4 zum Messen der Qualität der Reduktionsmittellösung im Kopf 2 und die in der Nähe der Verbindungsstelle des Reduktionsmitteltanks zu dem Reduktionsmitteltank parallele Führung der Anschlussstutzen.

In **Fig. 4** ist eine perspektivische Explosionsdarstellung des Fußes 3 der erfindungsgemäßen Entnahmeeinheit 1 gezeigt. Die vier Rohre zum Zuführen und Abführen des Heizmediums der Heizvorrichtung 10 sind gleichartig ausgebildet und mittels Steckverbindungen mit dem Fuß 3 verbunden. Das vertikal orientierte Rohr, an dem der Schwimmer 12 gleitend angeordnet ist, ist zu den Rohren zum Zuführen und Abführen des Heizmediums der Heizvorrichtung 10 zentral angeordnet und weist an einem dem Fuß 3 zugewandten Ende einen Gewindestab auf, der zusammen mit einer in dem Fuß 3 angeordneten Mutter die Schraubverbindung zum Sichern der Steckverbindungen bildet. Der Fuß 3 weist einen Filter auf, um ein Ansaugen von einer mit Partikeln verunreinigten Reduktionsmittellösung zu verhindern.

In den Figuren ist insbesondere eine erfindungsgemäße Entnahmeeinheit gezeigt, die eine oder mehrere der folgenden Merkmalskombinationen aufweist:
1. Entnahmeeinheit 1 zum Entnehmen einer, insbesondere harnstoffhaltigen, Reduktionsmittellösung aus einem Reduktionsmitteltank eines dieselmotorgetriebenen Fahrzeuges, aufweisend einen Kopf 2 zum Verbinden der Entnahmeeinheit 1 mit dem Reduktionsmitteltank, einen Sensor zum Messen eines Pegelstandes der Reduktionsmittellösung, einen Sensor zum Messen einer Temperatur der Reduktionsmittellösung und einen Sensor 4 zum Messen einer Qualität der Reduktionsmittellösung, wobei der Sensor 4 zum Messen der Qualität der Reduktionsmittellösung in dem Kopf 2 angeordnet ist, und wo der Kopf einen Anschlussstutzen zum Ansaugen der Reduktionsmittellösung aus dem Reduktionsmitteltank aufweist, wobei der Anschlussstutzen in Einbaulage der Entnahmeeinheit relativ zu dem Reduktionsmitteltank parallel zu dem Reduktionsmitteltank nahe der Verbindungsstelle verlaufend ausgebildet ist.
2. Entnahmeeinheit 1 nach Ziffer 1, wobei sämtliche Sensoren mit einer einzigen Platine 5 elektrisch verbunden sind, wobei die Platine 5 in dem Kopf 2 angeordnet ist.
3. Entnahmeeinheit 1 nach Ziffer 1 oder 2, wobei die Entnahmeeinheit 1 ein serielles Bussystem, insbesondere Controller Area Network CAN-Bussystem, aufweist, wobei das Bussystem in Einbaulage sämtliche Sensoren mittels eines einzigen Steckers 6 mit einer Bordelektronik des Fahrzeuges elektrisch verbindend ausgestaltet ist.
4. Entnahmeeinheit 1 nach Ziffer 3, wobei der Stecker 6 mittels eines mehradrigen, insbesondere vieradrigen, Kabels 7 an dem Kopf 2 mechanisch befestigt ist, wobei das Kabel 7 bei einer Durchtrittsöffnung in dem Kopf 2 von einem abgewinkelten Kabeldrehgelenk 8 unterbrochen oder in ein Kabeldrehgelenk 8 übergehend ausgebildet ist, wobei das Kabeldrehgelenk 8 in mindestens einer Ebene einen Drehwinkel von mindestens 150° bereitstellend ist.
5. Entnahmeeinheit 1 nach einer der vorhergehenden Ziffern, wobei der Sensor 4 zum Messen der Qualität der Reduktionsmittellösung mindestens eine optische Eigenschaft der Reduktionsmittellösung, insbesondere Refraktion von Licht vorbestimmter Wellenlängen, detektierend ausgebildet ist.
6. Entnahmeeinheit 1 nach einer der vorhergehenden Ziffern, wobei der Sensor 4 zum Messen der Qualität der Reduktionsmittellösung ein nach oben offenes Detektionsvolumen 9 aufweist, das bei einem Betrieb des Fahrzeuges von der Reduktionsmittellösung durchströmt wird.
7. Entnahmeeinheit 1 nach einer der Ziffern 1 bis 5, wobei der Sensor 4 zum Messen der Qualität der Reduktionsmittellösung ein seitlich offenes Detektionsvolumen 9 aufweist, das bei einem Betrieb des Fahrzeuges von der Reduktionsmittellösung durchströmt wird.
8. Entnahmeeinheit 1 nach einer der vorhergehenden Ziffern, wobei die Entnahmeeinheit 1 einen von dem Kopf 2 beabstandeten Fuß 3 aufweist, wobei der Kopf 2 und der Fuß 3 aus Kunststoff bestehend sind.
9. Entnahmeeinheit 1 nach einer der vorhergehenden Ziffern, wobei die Entnahmeeinheit 1 eine Heizvorrichtung 10 zum Heizen des Sensors 4 zum Messen der Qualität der Reduktionsmittellösung aufweist.
10. Entnahmeeinheit 1 nach einer der vorhergehenden Ziffern, wobei die Entnahmeeinheit 1 eine Heizvorrichtung 10 zum Heizen der Reduktionsmittellösung aufweist, wobei die Heizvorrichtung 10 zwei Rohre zum Zuführen eines Heizmediums und zwei Rohre zum Abführen des Heizmediums aufweist, wobei die Rohre im Wesentlichen entlang von Seitenkanten eines Quaders mit einer quadratischen Grundfläche angeordnet sind.
11. Entnahmeeinheit 1 nach Ziffer 10, wobei die Entnahmeeinheit 1 einen von dem Kopf 2 beabstandeten Fuß 3 aufweist, wobei zwischen dem Kopf 2 und dem Fuß 3 die Rohre angeordnet sind, wobei die Rohre gleichartig ausgebildet und mittels Steckverbindungen mit dem Kopf 2 und dem Fuß 3 verbunden sind.
12. Entnahmeeinheit 1 nach Ziffer 10 oder 11, wobei die Entnahmeeinheit 1 ein Entnahmerohr 11 zum Ansaugen der Reduktionsmittellösung aufweist, wobei das Entnahmerohr 11 nahe, insbesondere in Kontakt mit, einem der Rohre zum Zuführen des Heizmediums angeordnet ist.
13. Entnahmeeinheit 1 nach einer der Ziffern 10 bis 12, wobei das Heizmedium ein Motorkühlmedium des Fahrzeuges ist.

### BEZUGSZEICHENLISTE

- 1: Entnahmeeinheit
- 2: Kopf
- 3: Fuß
- 4: Sensor
- 5: Platine
- 6: Stecker
- 7: Kabel
- 8: Kabeldrehgelenk
- 9: Detektionsvolumen
- 10: Heizvorrichtung
- 11: Entnahmerohr
- 12: Schwimmer
- 13: Anschlussstutzen

## Patentansprüche

1. Entnahmeeinheit (1) zum Entnehmen einer, insbesondere harnstoffhaltigen, Reduktionsmittellösung aus einem Reduktionsmitteltank eines dieselmotorgetriebenen Fahrzeuges, aufweisend einen Kopf (2) zum Verbinden der Entnahmeeinheit (1) mit dem Reduktionsmitteltank an einer Verbindungsstelle des Reduktionsmitteltanks, einen Sensor zum Messen eines Pegelstandes der Reduktionsmittellösung, einen Sensor zum Messen einer Temperatur der Recfuktionsmittellösung und einen Sensor (4) zum Messen einer Qualität der Reduktionsmittellösung, wobei der Kopf (2) einen Anschlussstutzen (13) zum Ansaugen der Reduktionsmittellösung aus dem Reduktionsmitteltank aufweist, wobei der Anschlussstutzen (13) in Einbaulage der Entnahmeeinheit (1) relativ zu dem Reduktionsmitteltank parallel zu dem Reduktionsmitteltank nahe der Verbindungsstelle verlaufend ausgebildet ist, **dadurch gekennzeichnet, dass** der Sensor (4) zum Messen der Qualität der Reduktionsmittellösung in dem Kopf (2) angeordnet ist.

2. Entnahmeeinheit (1) nach Anspruch 1, **dadurch gekennzeichnet, dass** sämtliche Sensoren mit einer einzigen Platine (5) elektrisch verbunden sind, wobei die Platine (5) in dem Kopf (2) angeordnet ist.

3. Entnahmeeinheit (1) nach Anspruch 1 oder 2, **dadurch gekennzeichnet, dass** die Entnahmeeinheit (1) ein serielles Bussystem, insbesondere Controller Area Network (CAN)-Bussystem, aufweist, wobei das Bussystem einen einzigen Stecker (6) zum elektrischen Verbinden sämtlicher Sensoren mit einer Bordelektronik des Fahrzeuges aufweist.

4. Entnahmeeinheit (1) nach Anspruch 3, **dadurch gekennzeichnet, dass** der Stecker (6) mittels eines mehradrigen, insbesondere vieradrigen, Kabels (7) an dem Kopf (2) mechanisch befestigt ist, wobei das Kabel (7) bei einer Durchtrittsöffnung in dem Kopf (2) von einem abgewinkelten Kabeldrehgelenk (8) unterbrochen oder in ein Kabeldrehgelenk (8) übergehend ausgebildet ist, wobei das Kabeldrehgelenk (8) in mindestens einer Ebene einen Drehwinkel von mindestens 150° bereitstellend ausgebildet ist.

5. Entnahmeeinheit (1) nach einem der vorhergehenden Ansprüche, **dadurch gekennzeichnet, dass** der Sensor (4) zum Messen der Qualität der Reduktionsmittellösung mindestens eine optische Eigenschaft der Reduktionsmittellösung, insbesondere Refraktion von Licht vorbestimmter Wellenlängen, detektierend ausgebildet ist.

6. Entnahmeeinheit (1) nach einem der vorhergehenden Ansprüche, **dadurch gekennzeichnet, dass** der Sensor (4) zum Messen der Qualität der Reduktionsmittellösung ein oben ein- und ausströmbares Detektionsvolumen (9) aufweist, das bei einem Betrieb des Fahrzeuges von der Reduktionsmittellösung durchströmt wird.

7. Entnahmeeinheit (1) nach einem der Ansprüche 1 bis 5, **dadurch gekennzeichnet, dass** der Sensor (4) zum Messen der Qualität der Reduktionsmittellösung ein seitlich ein- und ausströmbares Detektionsvolumen (9) aufweist, das bei einem Betrieb des Fahrzeuges von der Reduktionsmittellösung durchströmt wird.

8. Entnahmeeinheit (1) nach einem der vorhergehenden Ansprüche, **dadurch gekennzeichnet, dass** die Entnahmeeinheit (1) einen von dem Kopf (2) beabstandeten Fuß (3) aufweist, wobei der Kopf (2) und der Fuß (3) aus Kunststoff bestehend sind.

9. Entnahmeeinheit (1) nach einem der vorhergehenden Ansprüche, **dadurch gekennzeichnet, dass** die Entnahmeeinheit (1) eine Heizvorrichtung (10) zum Heizen des Sensors (4) zum Messen der Qualität der Reduktionsmittellösung aufweist.

10. Entnahmeeinheit (1) nach einem der vorhergehenden Ansprüche, **dadurch gekennzeichnet, dass** die Entnahmeeinheit (1) eine Heizvorrichtung (10) zum Heizen der Reduktionsmittellösung aufweist, wobei die Heizvorrichtung (10) zwei Rohre zum Zuführen eines Heizmediums und zwei Rohre zum Abführen des Heizmediums aufweist, wobei die Rohre im Wesentlichen entlang von Seitenkanten eines Quaders mit einer quadratischen Grundfläche angeordnet sind.

11. Entnahmeeinheit (1) nach Anspruch 10, **dadurch gekennzeichnet, dass** die Entnahmeeinheit (1) einen von dem Kopf (2) beabstandeten Fuß (3) aufweist, wobei zwischen dem Kopf (2) und dem Fuß (3) die Rohre angeordnet sind, wobei die Rohre gleichartig ausgebildet und mittels Steckverbindungen mit dem Kopf (2) und dem Fuß (3) verbunden sind.

12. Entnahmeeinheit (1) nach Anspruch 10 oder 11, **dadurch gekennzeichet,** dass die Entnahmeeinheit (1) ein Entnahmerohr (11) zum Ansaugen der Reduktionsmittellösung aus dem Reduktionsmitteltank aufweist, wobei das Entnahmerohr (11) nahe, insbesondere in Kontakt mit, einem der Rohre zum Zuführen des Heizmediums angeordnet ist.

13. Entnahmeeinheit (1) nach einem der Ansprüche 10 bis 12, **dadurch gekennzeichnet, dass** das Heizmedium ein Motorkühlmedium des Fahrzeuges ist.

14. Entnahmeeinheit (1) nach einem der vorhergehenden Ansprüche, **dadurch gekennzeichnet, dass** der Kopf (2) in Einbaulage der Entnahmeeinheit (1) relativ zu dem Reduktionsmitteltank zur Hälfte außerhalb des Reduktionsmitteltanks und zur Hälfte innerhalb des Reduktionsmitteltanks angeordnet ist.

15. Entnahmeeinheit (1) nach einem der vorhergehenden Ansprüche, **dadurch gekennzeichnet, dass** der Kopf (2) in Einbaulage der Entnahmeeinheit (1) relativ zu dem Reduktionsmitteltank weniger als 8 cm aus dem Reduktionsmitteltank herausragend und weniger als 8 cm in den Reduktionsmitteltank hineinragend ausgebildet ist.

## Claims

1. A extraction unit(1) for extracting a reduction agent solution, in particular one containing urea, from a reduction agent tank of a diesel engine-driven motor vehicle, comprising a head (2) for connecting the extraction unit (1) with the reduction agent tank at a connection point of the reduction agent tank, a sensor for measuring a fluid level of the reduction agent solution, a sensor (4) for measuring a quality of the reduction agent solution, wherein the head (2) has a connection fitting (13) for drawing the reduction agent solution out from the reduction agent tank, wherein relative to the reduction agent tank the connection fitting (13) extends in parallel to the reduction agent tank when the extraction unit (1) is assembled, **characterised in that** the sensor (4) for measuring the quality of the reduction agent solution is arranged in the head (2).

2. The extraction unit (1) according to claim 1, **characterised in that** all the sensors are electrically connected with a signal board (5), wherein the board (5) is arranged in the head (2).

3. The extraction unit (1) according to claim 1 or 2, **characterised in that** the extraction unit (1) comprises a serial bus system, more particularly a Controller Area Network (CAN) bus system, wherein the bus system has one single plug (6) for electrically connecting all the sensors with an on-board electronics system of the motor vehicle.

4. The extraction unit (1) according to claim 3, **characterised in that** the plug (6) is mechanically attached to the head (2) by means of a multicore, more particularly four-core cable (7), wherein at an opening in the head (2) the cable (7) is interrupted by an angled cable turning joint (8) or is designed to merge into a cable turning joint (8) wherein the cable turning joint (8) is designed to provide a turning angle of at least 150° in at least one plane.

5. The extraction unit (1) according to any one of the preceding claims, **characterised in that** the sensor (4) for measuring the quality of the reduction agent solution is designed to detect at least one optical property of the reduction agent solution, in particular the refraction of light of predetermined wavelengths.

6. The extraction unit (1) according any one of the preceding claims, **characterised in that** the sensor (4) for measuring the quality of the reduction agent solution has an detection volume (9) with inflow and outflow at the top, through which the reduction agent solution flows during operation of the motor vehicle.

7. The extraction unit (1) according to any one of claims 1 to 5, **characterised in that** the sensor (4) for measuring the quality of the reduction agent solution has a detection volume (9) with lateral inflow and outflow,through which the reduction agent solution flows during operation of the motor vehicle.

8. The extraction unit (1) according to any one of the preceding claims, **characterised in that** the extraction unit (1) has a foot (3) at a distance from the head (2) wherein the head (2) and the foot (3) are made of plastic.

9. The extraction unit (1) according to any one of the preceding claims, **characterised in that** the extraction unit (1) comprises a heating device (10) for heating the sensor (4) for measuring the quality of the reduction agent solution.

10. Extraction unit (1) according to any one of the preceding claims, **characterised in that** the extraction unit (1) comprises a heating device (10) for heating the reduction agent solution, wherein the heating device (10) has two pipes for supplying a heating medium and two pipes for removing the heating medium, wherein the pipes are essentially arranged along side edges of a cuboid form with a quadratic base.

11. The extraction unit (1) according to claim 10, **characterised in that** the extraction unit (1) comprises a foot (3) at a distance from the head (2), wherein the pipes are arranged between the head (2) and the foot (3), wherein the pipes are designed in an identical manner and are connected to the head (2) and the foot (3) by means of plug connections.

12. The extraction unit (1) according to claim 10 or 11, **characterised in that** the extraction unit (1) comprises a extraction pipe (11) for drawing in the reduction agent solution, wherein the extraction pipe (11) is arranged close to, in particular in contact with, one of the pipes for supplying the heating medium.

13. The extraction unit (1) according to any one of claims 10 to 12, **characterised in that** the heating medium is an engine cooling medium of the motor vehicle.

14. The extraction unit (1) according to any one of the preceding claims, **characterised in that** relative to the reduction agent tank, when the extraction unit (1) is assembled the head (2) is arranged half outside the reduction agent tank and half inside the reduction agent tank.

15. The extraction unit (1) according to any one of the preceding claims, **characterised in that** relative to the reduction agent tank, when the extraction unit (1) is assembled the head (2) is arranged to protrude less than 8 cm out from the reduction agent tank and to protrude less than 8 cm into the reduction agent tank.

## Revendications

1. Unité de prélèvement (1) destiné à prélever une solution d'agent réducteur contenant de l'urée dans un réservoir d'agent réducteur d'un véhicule entraîné par un moteur diesel, comportant une tête (2) destinée à relier l'unité de prélèvement (1) avec le réservoir d'agent réducteur sur une zone de liaison du réservoir d'agent réducteur, un capteur pour mesurer un niveau de la solution d'agent réducteur, un capteur pour mesurer une température de la solution d'agent réducteur et un capteur (4) pour mesurer une qualité de la solution d'agent réducteur, la tête (2) comportant une tubulure de raccord (13) pour l'aspiration de la solution d'agent réducteur hors du réservoir d'agent réducteur, en position de montage de l'unité de prélèvement (1), la tubulure de raccord (13) étant conçue en s'écoulant à proximité de la zone de liaison, **caractérisée en ce que** le capteur (4) destiné à mesurer la qualité de la solution d'agent réducteur est placé dans la tête (2).

2. Unité de prélèvement (1) selon la revendication 1, **caractérisée en ce que** tous les capteurs sont électriquement connectés sur une seule carte (5), la carte (5) étant placée dans la tête (2).

3. Unité de prélèvement (1) selon la revendication 1 ou 2, **caractérisée en ce que** l'unité de prélèvement (1) comporte un système de bus en série, notamment un système de bus CAN (Controller Area Network), le système de bus comportant un seul connecteur (6) pour la connexion électrique de tous les capteurs avec un système de bord électronique du véhicule.

4. Unité de prélèvement (1) selon la revendication 3, **caractérisée en ce que** le connecteur (6) est mécaniquement fixé sur la tête (2) au moyen d'un câble (7) multiconducteurs, notamment à quatre conducteurs, au niveau d'un orifice de passage dans la tête (2), le câble (7) étant interrompu par une articulation rotative (8) de câble coudée ou étant conçu en passant dans une articulation rotative (8) de câble, l'articulation rotative (8) de câble étant conçue pour mettre à disposition dans au moins un plan un angle de rotation d'au moins 150°.

5. Unité de prélèvement (1) selon l'une quelconque des revendications précédentes, **caractérisée en ce que** le capteur (4) destiné à mesurer la qualité de la solution d'agent réducteur est conçu pour détecter au moins une propriété optique de la solution d'agent réducteur, notamment la réfraction de lumière d'une longueur d'ondes prédéfinie.

6. Unité de prélèvement (1) selon l'une quelconque des revendications précédentes, **caractérisée en ce que** le capteur (4) destiné à mesurer la qualité de la solution d'agent réducteur comporte un volume de détection (9) affluant et effluant par le dessus, qui lors d'un fonctionnement du véhicule est traversé par la solution d'agent réducteur.

7. Unité de prélèvement (1) selon l'une quelconque des revendications 1 à 5, **caractérisé en ce que** le capteur (4) destiné à mesurer la qualité de l'agent réducteur comporte un volume de détection (9) affluant et effluant latéralement, qui lors d'un fonctionnement du véhicule est traversé par la solution d'agent réducteur.

8. Unité de prélèvement (1) selon l'une quelconque des revendications précédentes, **caractérisé en ce que** l'unité de prélèvement (1) comporte un pied (3) écarté de la tête (2), la tête (2) et le pied (3) étant conçus en matière plastique.

9. Unité de prélèvement (1) selon l'une quelconque des revendications précédentes, **caractérisé en ce que** l'unité de prélèvement (1) comporte un dispositif de chauffage (10) pour chauffer le capteur (4) destiné à mesurer la qualité de la solution d'agent réducteur.

10. Unité de prélèvement (1) selon l'une quelconque des revendications précédentes, **caractérisée en ce que** l'unité de prélèvement (1) comporte un dispositif de chauffage (10) pour chauffer la solution d'agent réducteur, le dispositif de chauffage (10) comportant deux tubes pour l'alimentation d'un fluide chauffant et deux tubes pour l'évacuation du fluide chauffant, les tubes étant placés sensiblement le long d'arêtes latérales d'un parallélépipède avec une surface de base quadratique.

11. Unité de prélèvement (1) selon la revendication 10, **caractérisée en ce que** l'unité de prélèvement (1) comporte un pied (3) écarté de la tête (2), les tubes étant placés entre la tête (2) et le pied (3), les tubes étant conçus de manière similaire et étant reliés avec la tête (2) et le pied (3) par des raccords enfichables.

12. Unité de prélèvement (1) selon la revendication 10 ou 11, **caractérisée en ce que** l'unité de prélèvement (1) comporte un tube de prélèvement (11) pour l'aspiration de la solution d'agent réducteur hors du réservoir d'agent réducteur, le tube de prélèvement (11) étant placé à proximité de, notamment en contact avec l'un des tubes destinés à alimenter le fluide de chauffage.

13. Unité de prélèvement (1) selon l'une quelconque des revendications 10 à 12, **caractérisée en ce que** le fluide de chauffage est un fluide de refroidissement du moteur du véhicule.

14. Unité de prélèvement (1) selon l'une quelconque des revendications précédentes, **caractérisé en ce que** dans la position de montage de l'unité de prélèvement (1), par rapport au réservoir d'agent réducteur, la tête (2) est placée de moitié à l'extérieur du réservoir d'agent réducteur et de moitié à l'intérieur du réservoir d'agent réducteur.

15. Unité de prélèvement (1) selon l'une quelconque des revendications précédentes, **caractérisée en ce que** dans la position de montage de l'unité de prélèvement (1), par rapport au réservoir d'agent réducteur, la tête (2) est conçue en saillant de moins de 8 cm hors du réservoir d'agent réducteur et en saillant de moins de 8 cm dans le réservoir d'agent réducteur.
